Europäisches Patentamt

European Patent Office

Office européen des brevets

(19)

(11) Veröffentlichungsnummer: **0 229 323 B1**

(12) **EUROPÄISCHE PATENTSCHRIFT**

(45) Veröffentlichungstag der Patentschrift: **20.02.91**

(51) Int. Cl.⁵: **G05D 23/19**, F24H 1/10, H05B 1/02

(21) Anmeldenummer: **86117216.1**

(22) Anmeldetag: **10.12.86**

(54) **Durchlauferhitzer.**

(30) Priorität: **27.12.85 DE 3546214**

(43) Veröffentlichungstag der Anmeldung:
**22.07.87 Patentblatt 87/30**

(45) Bekanntmachung des Hinweises auf die Patenterteilung:
**20.02.91 Patentblatt 91/08**

(84) Benannte Vertragsstaaten:
**AT BE CH DE FR GB IT LI**

(56) Entgegenhaltungen:
**DE-A- 2 602 868**
**DE-A- 3 304 322**
**DE-A- 3 415 542**
**GB-A- 2 102 164**

(73) Patentinhaber: **Elektromanufaktur Zangenstein Hanauer GmbH & Co.**

**D-8471 Altendorf(DE)**

(72) Erfinder: **Baader, Helmut**
**Birkenweg 6**
**D-8470 Nabburg(DE)**
Erfinder: **Hanauer, Erbst Alfred**
**An der Schleif 3**
**D-8467 Zangenstein(DE)**

(74) Vertreter: **Wuesthoff, Franz, Dr.-Ing. et al**
**Wuesthoff & Wuesthoff Patent- und Rechts-anwälte Schweigerstrasse 2**
**D-8000 München 90(DE)**

EP 0 229 323 B1

**Beschreibung**

Die Erfindung betrifft einen Durchlauferhitzer für Wasser mit einem Strömungsweg für das zu erhitzende Wasser, in dem eine Mehrzahl von Heizelementen, wie beispielsweise Heizwiderstände, derart angeordnet sind, daß sie das zu erhitzende Wasser der Reihe nach passiert, zumindest einer Temperaturmeßeinrichtung am Einlauf des Wassers in den Durchlauferhitzer und mit einer Steuerschaltung zum Steuern der Heizleistung ausgewählter Heizelemente, um am Auslauf aus dem Durchlauferhitzer erhitztes Wasser mit einer vorgegebenen Solltemperatur zu erhalten.

Elektrisch beheizte Durchlauferhitzer, die das Wasser unmittelbar vor dem Verbrauch erhitzen, sind in unterschiedlichsten Ausführungen bekannt. Häufig wird bei Überschreiten einer Mindest-Durchlaufmenge des fließenden Wassers über einen membranbetätigten Schalter eine erste, relativ niederige Heizleistung eingeschaltet und über weitere Kontakte des Membranschalters bei Überschreiten eines höheren Grenzwertes der Durchflußmenge die Heizleistung auf eine höhere Stufe umgeschaltet. Bei derartigen Durchlauferhitzern wird die Auslauftemperatur des Wassers nicht auf einen vorgegebenen Sollwert geregelt. Vielmehr ist die Wassertemperatur von der Durchflußmenge, der Eintrittstemperatur des Wassers sowie dem momentanen Wert der Netzspannung abhängig.

Es ist auch bekannt, Durchflußmeßgeräte für das strömende Wasser einzusetzen, beispielsweise in Form eines Flügelrades, und auch die Wassertemperatur am Auslauf des Durchlauferhitzers zu messen. Mittels der gemessenen Durchflußmenge und des ebenfalls gemessenen Auslauftemperatur kann die Heizleistung geregelt werden.

Durchflußmeßgeräte mit der erforderlichen Genauigkeit sind teuer und auch störanfällig. In der DE-OS 34 15 542 wird ein gattungsgemäßer Durchlauferhitzer beschrieben, bei dem die Auslauftemperatur des Wassers ohne Verwendung eines Durchflußmeßgerätes auf einen vorgegebenen Sollwert geregelt wird. Hierzu wird dort am Eingang und am Ausgang des Durchlauferhitzers mittels Meßfühlern die Temperatur gemessen und die Heizleistung von mehreren im Strömungsweg hintereinander angeordneten Heizelementen wird entsprechend geregelt. In einer Steuerphase wird die Heizleistung zunächst annähernd bis an eine durch die Einlauftemperatur und die Auslauftemperatur bestimmte Sollheizleistung erhöht, welche zum Erreichen der Solltemperatur bei der gegebenen Durchflußmenge und Einlauftemperatur erforderlich ist, worauf dann in einer nachfolgenden Regelphase die Auslauftemperatur auf die Solltemperatur nachgeregelt wird. Eine derartige Regelung unter Verwendung der Einlauf- und der Auslauftemperatur hat den Nachteil, daß das Wasser erst nach dem Durchlaufen des Heizblockes den Temperaturfühler am Ausgang erreicht. Somit verstreicht eine beträchtliche "Totzeit", welche zudem von der Durchflußmenge abhängt. Insbesondere bei sich schnell ändernden Durchflußmengen ergeben sich Unzulänglichkeiten bei der Temperaturregelung. Das System ist insgesamt zu "träge", um sich schnell ändernden Bedingungen anpassen zu können. Durch die lange Regelstrecke ergeben sich bei schnellen Änderungen der Durchflußmenge deutliche Abweichungen der Wassertemperatur am Auslauf von der Solltemperatur.

Der Erfindung liegt die Aufgabe zugrunde, einen gattungsgemäßen Durchlauferhitzer derart weiterzubilden, daß auch bei Änderungen der Betriebsparameter, wie der Durchflußgeschwindigkeit und der momentanen Netzspannung, eine genaue Einhaltung der Solltemperatur am Auslauf gewährleistet ist.

Erfindungsgemäß wird diese Aufgabe dadurch gelöst, daß Einrichtungen vorgesehen sind, um die Temperaturerhöhung des Wassers durch ein Heizelement oder einen Teil der Heizelemente zu messen und daß die Heizleistung ausgewählter anderer, stromauf oder stromab angeordneter Heizelemente gemäß der gemessenen Temperaturerhöhung und der Solltemperatur gesteuert wird.

Bevorzugt wird für die Temperaturmessung das Heizelement gewählt, welches dem Einlauf des Durchlauferhitzers am nächsten liegt. Anstatt die Temperatur am Einlauf und am Auslauf des Durchlauferhitzers zu messen wird erfindungsgemäß also eine wesentlich kürzere Regelstrecke gewählt, die vom Einlauf bis hinter das erste Heizelement reicht. Bei bekannter Eingangstemperatur am Einlauf des Durchlauferhitzers sowie bekannter Heizleistung des vorne angeordneten Heizelementes ergeben sich aus der nach Passieren dieses Heizelementes erzielten Temperaturerhöhung des Wassers sämtliche erforderlichen Informationen, um mit den nachfolgenden Heizelementen die Steuerung der Auslauftemperatur auf den vorgegebenen Sollwert durchzuführen. Beispielsweise ist die Durchflußmenge des Wassers bei bekannter Einlauftemperatur und bekannter Heizleistung des vorne angeordneten Heizelementes eine eindeutige Funktion der nach Passieren dieses Heizelementes gemessenen Temperaturerhöhung.

In einer einfachen Ausgestaltung der Erfindung sind vor und nach dem vorne angeordneten Heizelement jeweils Temperaturfühler vorgesehen, welche die für die Regelung erforderliche Temperaturerhöhung messen.

Statt der vorstehend genannten Temperaturfühler kann die Temperaturerhöhung auch direkt mittels des zur Temperaturmessung ausgewählten Heizelementes dadurch gemessen werden, daß letzteres als Heizwiderstand mit einem geeigneten Widerstands-Temperaturkoeffizienten ausgebildet ist, so daß durch Messung des Widerstandswertes des Heizelementes die Temperatur zu bestimmen ist.

Eine besonders genaue Anpassung der Auslauftemperatur an den Sollwert wird in einer bevorzugten Ausgestaltung der Erfindung dadurch erreicht, daß die Heizleistung der nachfolgenden Heizelemente in Abhängigkeit vom Volumen des Strömungsweges zwischen dem zur Temperaturmessung ausgewählten Heizelement und den für die Aufheizung ausgewählten anderen Heizelementen gesteuert wird.

Es können als Heizelemente genormte Widerstände vorgesehen werden, welche allerdings relativ teuer sind. In einer bevorzugten Ausgestaltung der Erfindung werden deshalb nicht notwendig abgeglichene Heizwiderstände eingesetzt und es wird der tatsächliche Widerstandswert gemessen. Die Meßergebnisse werden gespeichert und in die elektronische Steuereinrichtung für die Regelung der Heizleistung eingegeben und entsprechend berücksichtigt. Diese Maßnahme hat insbesondere den Vorteil, daß bei einem Austausch des Heizblockes mit den Heizelementen vor Ort durch den Monteur keine Abgleicharbeiten durchgeführt werden müssen, da die Widerstandswerte des neu eingebauten Heizblockes nach dem Einbau direkt in die elektronische Steuereinrichtung eingegeben werden, wo die neuen Werte bei der Bestimmung der Heizleistungen berücksichtigt werden.

Nachfolgend wird ein Ausführungsbeispiel der Erfindung anhand der Zeichnung näher beschrieben. Es zeigt:

Fig. 1   den Heizblock eines Durchlauferhitzers in schematischer Darstellung;

Fig. 2   einen Schaltplan für den in Fig. 1 dargestellten Durchlauferhitzer und

Fig. 3   ein Beispiel für die zeitliche Steuerung der Heizleistung einzelner Heizelemente.

In Fig. I ist der Heizblock eines Durchlauferhitzers schematisch dargestellt. Wasser strömt in Richtung des Pfeiles 10 in den Heizblock und verläßt ihn in Richtung des Pfeiles 12. Das Rohr 14 definiert den Strömungsweg des Wassers. Im Strömungsweg sind im dargestellten Ausführungsbeispiel sechs Widerstände R1, R2, R3, R4, R5 und R6 der Reihe nach hintereinander angeordnet, so daß das Wasser die als Heizelemente dienenden Widerstände R1, R2, ..., R6 hintereinander passiert und dabei notwendig in guten, gleichmäßigen Wärmekontakt mit jedem einzelnen Heizelement kommt. Die Widerstände R1, R2, ..., R6 sind mit elektrischen Zu- und Ableitungen 16, 18 (nur für R1 gezeigt) versehen.

Am Einlauf 20 des Heizblockes ist ein Temperaturfühler F1 angeordnet, welcher die Einlauftemperatur T1 mißt. Hinter dem in Strömungsrichtung 10 zuvorderst angeordneten Widerstand R1 ist ein weiterer Temperaturfühler F2 angeordnet, welcher die Temperatur des Wassers nach Passieren des Widerstandes R1 mißt. Die nachfolgenden Widerstände R2, R3, R4, R5 und R6 werden dann in der noch zu beschreibenden Weise derart mit Strom versorgt, daß am Auslaß 22 des Heizblockes das erhitzte Wasser die gewünschte Solltemperatur TS aufweist.

Um am Auslauf 22 die gewünschte Solltemperatur TS zu erhalten, muß der durchfließenden Wassermenge insgesamt die Leistung PS zugeführt werden, die sich wie folgt ergibt:

$$PS = \frac{P1\ (TS - T1)}{T2 - T1}$$

Hierbei ist P1 die dem Wasser mittels des ersten Widerstandes R1 zugeführte Energie. Die in Durchflußrichtung des Wassers hinter dem Widerstand R1 nachfolgenden weiteren Widerstände R2, ..., R6 müssen somit insgesamt dem Wasser die Energie PS-P1 zuführen, falls PS > P1 ist. Da in der vorstehenden Gleichung sämtliche Größen der rechten Seite bekannt sind, kann der erforderliche Energiebetrag PS-P1, welcher mittels der Heizelemente R2, ..., R6 dem Wasser zugeführt werden muß, genau bestimmt werden, ohne daß die Messung der tatsächlichen Auslauftemperatur und ihre Auswertung in einem Regelkreis erforderlich wäre. Da sich die Leistungen PR der einzelnen Ohm'schen Widerstände gemäß der Formel

$$PR = \frac{U^2}{R}$$

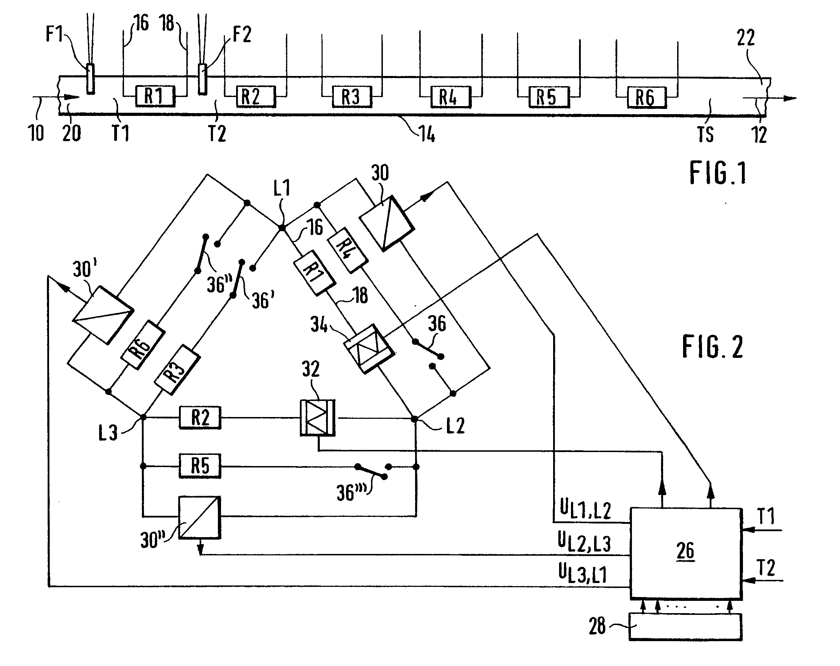

ergibt, läßt sich die Energieabgabe jedes einzelnen Widerstandes genau bestimmen, da der Ohm'sche Widerstand und die anliegende Spannung bekannt sind. Falls die Widerstandswerte nicht von vorneherein genau abgeglichen sind, werden sie genau gemessen und die Widerstandswerte werden in einem Speicher 28 (Fig. 2) abgespeichert. Aus dem Speicher 28 werden die Widerstandswerte in die elektronische Steuereinrichtung 26 eingelesen.

Fig. 2 zeigt die Schaltung der einzelnen Widerstände R1, ..., R6 gemäß Fig. 1 sowie die Steuerschaltung 26. Am Drehstromnetz L1, L2 und L3 sind jeweils in Dreieckschaltung zwei der Widerstände parallelgeschaltet. Die zwischen den drei Leitern L1, L2 und L3 des Drehstromnetzes momentan anliegenden Spannungen werden mittels der Spannungsmeßeinrichtungen 30, 30' und 30''

gemessen und in die Steuerschaltung 26 eingegeben. Die Widerstände R1, ..., R6 werden durch Thyristoren oder Triacs 32, 34 bzw. Schalter 36, 36', 36" und 36'" beschaltet, welche durch die elektronische Steuereinrichtung 26 gesteuert werden.

Die an den einzelnen Widerständen R1, ..., R6 anliegenden Spannungen entsprechen den Spannungen zwischen den Leitern L1, L2 und L3 des Drehstromnetzes und werden nach der Messung ihrer momentanen Werte in die elektronische Steuereinrichtung 26 eingegeben und bei der Errechnung der für die einzelnen Widerstände erforderlichen Heizleistungen benutzt. Insgesamt werden die dem Widerstand R1 nachfolgenden Widerstände R2, ..., R6 derart mit Strom versorgt, daß sie insgesamt die oben errechnete Energie (PS-P1) abgeben. Hierzu kann je nach der erforderlichen Energie ein einzelner Widerstand aus der Widerstandsreihe R2, ... oder es können mehrere Widerstände ausgewählt werden. Um eine feinstufige Anpassung der abgegebenen Leistung an die eingestellte Solltemperatur TS zu erreichen, können einzelne der Widerstände auch getaktet (pulsierend) mit Strom versorgt werden, gemäß Fig. 2 beispielsweise neben dem Widerstand R1 der Widerstand R2, welche durch einen Thyristor oder ein Triac gesteuert werden.

Bei geringen Durchflußmengen und einer niedrigen Solltemperatur TS kann es vorkommen, daß der Widerstand R1 bereits eine Heizleistung erzeugt, mit welcher die gewünschte Solltemperatur überschritten wird, d.h. T2 > TS. In diesem Falle wird auch die Leistung des ersten Widerstandes R1 z.B. durch Takten mittels der Steuerschaltung 26 auf einen niedrigeren Wert geregelt.

Die Messung der Temperatur T2 (Fig. 1) muß nicht unbedingt durch den Einbau eines gesonderten Temperaturfühlers F2 erfolgen, vielmehr kann für den Widerstand R1 auch ein Material mit passendem Widerstands-Temperaturkoeffizienten verwendet werden, so daß sich aus dem gemessenen Wert des Widerstandes R1 die Temperatur T2 ergibt. Die Widerstandsmessung erfolgt entweder durch Messung der anliegenden Spannung und des durch sie erzeugten Laststromes oder getrennt vom Leistungskreis unter Zwischenschaltung eines Hochpaßfilters durch eine in der Steuerschaltung 26 vorgesehene Widerstandsmeßeinrichtung, die mit einer entsprechend höherfrequenten Meßspannung arbeitet.

Mit der vorstehend beschriebenen Steuerschaltung für einen Durchlauferhitzer können bei normalem Betrieb die eingestellten Temperatur-Sollwerte am Geräteauslauf unabhängig von der Einlauftemperatur T1, der Durchflußmenge des Wassers sowie der Netzspannung eingehalten werden.

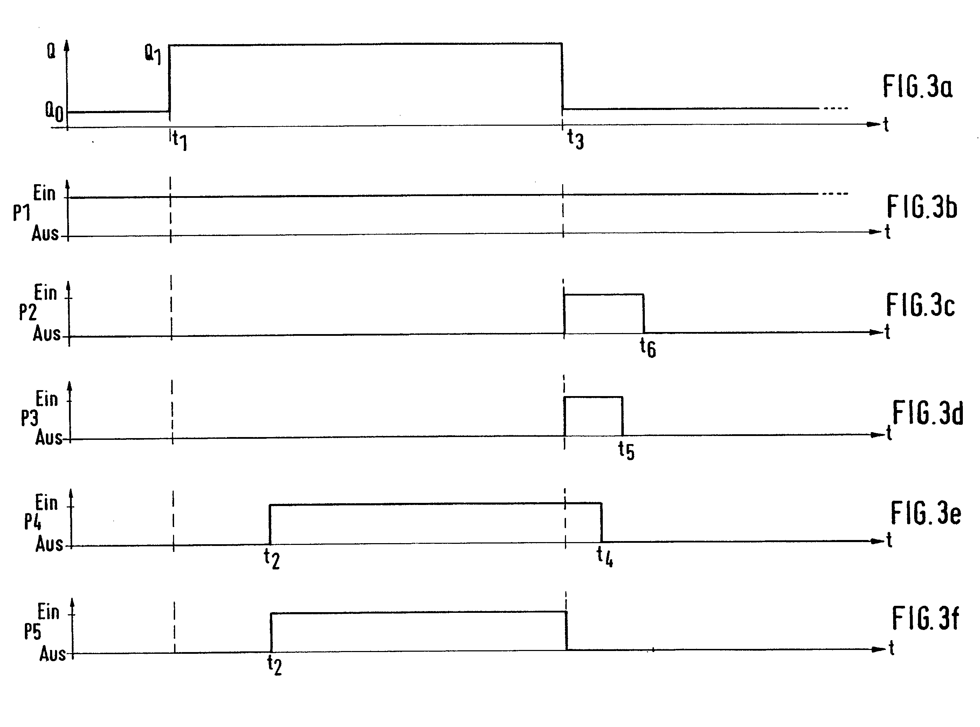

Ein besonders schwankungsfreier Verlauf der Auslauftemperatur des Wassers bei sehr sprunghaften Änderungen der Durchflußmenge, oder auch der Wasser-Einlauftemperatur T1 wird dann erreicht, wenn die Steuerung der durch die einzelnen Widerstände R1, ..., R6 abgegebenen Leistung zeitlich auf die geometrische Anordnung der Widerstände im Rohr 14 abgestimmt ist. Es wird also berücksichtigt, daß die Widerstände R2, ..., R6 unterschiedlichen Abstand zum Meß-Widerstand R1 haben, was nachfolgend anhand der Fig. 3 näher erläutert werden soll.

In Fig. 3a ist die Durchflußmenge Q des Wassers über der Zeit aufgetragen, während die Figuren 3b bis 3f jeweils die durch die einzelnen Widerstände R1, ..., R5 abgegebenen Leistungen P1, ..., bzw. P5 mit gleichem Zeitmaßstab wiedergeben.

Es sei angenommen, daß der Durchlauferhitzer zu Beginn der Betrachtung von einer Wassermenge $Q_o$ durchströmt wird und daß zur Aufheizung des Wassers auf die gewünschte Austrittstemperatur TS die Leistung P1 erforderlich ist, die ausschließlich durch den ersten Widerstand R1 aufgebracht wird. Das strömende Wasser hat also am in Strömungsrichtung 10 (Fig. 1) hinteren Ende des Widerstandes R1 bereits die gewünschte Temperatur erreicht. Nun wird zum Zeitpunkt $t_1$ die durchströmende Wassermenge plötzlich auf $Q_1$ erhöht. Um diese größere Wassermenge $Q_1$ auf die gewünschte Solltemperatur TS aufzuheizen, wird eine größere Heizleistung benötigt, die beispielsweise durch gleichzeitigen Einsatz der Heizwiderstände R4 und R5 erzeugt wird. Würde nun die Steuerschaltung 26 zum Zeitpunkt $t_1$ schlagartig die Leistung der Widerstände R4 und R5 einschalten, so würde das zwischen dem in Strömungsrichtung hinteren Ende des Wider standes R1 und dem vorderen Ende des Widerstandes R4 befindliche Wasser, das bereits auf die Solltemperatur TS erwärmt ist, beim Vorbeifließen an den Widerständen R4 und R5 noch weiter aufgeheizt, so daß am Auslauf 22 die Solltemperatur TS überschritten werden würde. Dies wird dadurch vermieden, daß die Widerstände R4 und R5 erst zu einem späteren Zeitpunkt $t_2$ zugeschaltet werden, wenn das am in Strömungsrichtung vordere Ende des Widerstandes R1 zum Zeitpunkt $t_1$ anstehende Kaltwasser das vordere Ende des Widerstandes R4 erreicht hat. Die Verzögerungszeit $t_2-t_1$ ergibt sich aus dem Volumen des Rohres 14 zwischen den Widerständen R1 und R4 einerseits sowie aus der Menge $Q_1$ durchströmenden Wassers andererseits. Da der Rauminhalt des Rohres 14 bekannt ist und die durchströmende Menge aus dem erforderlichen Temperaturanstieg TS-T1 und der errechneten erforderlichen Heizleistung PS ermittelt werden kann, ergibt sich auch die erforderliche Verzögerungszeit $t_2-t_1$, welche in der Steuerschaltung 26 errechnet wird. Entsprechend dem vorstehend beschriebenen Beispiel wird auch bei Einschaltung der anderen Widerstände verfahren.

Bei einer abrupten Änderung der Durchflußmenge in entgegengesetzter Richtung, d.h. von höheren Werten $Q_1$ auf tiefere Werte $Q_0$ ist das am vorderen Ende des Widerstandes R4 anstehende Wasser noch zu kalt. Würde also zum Zeitpunkt $t_3$ (Fig. 3a) die Heizleistung der Widerstände R4 und R5 schlagartig abgeschaltet, so bliebe das zwischen den Widerständen und R4 stehende Wasser unbeheizt und würde am Auslauf 22 zu kalt austreten. Die Steuerung ist deshalb so gestaltet, daß zum Zeitpunkt $t_3$ nur der Widerstand R5 abgeschaltet wird, während zusätzlich zum Widerstand R4 die Widerstände R3 und R2 eingeschaltet werden. Nach einer kurzen Verzögerung wird zum Zeitpunkt $t_4$ auch der Widerstand R4 und nach einer weiteren Verzögerung zum Zeitpunkt $t_5$ der Widerstand R3 und schließlich zum Zeitpunkt $t_6$ der Widerstand R2 abgeschaltet, so daß das Wasser am Auslauf 22 mit der gewünschten Solltemperatur TS austritt. Die Verzögerungszeiten $t_4$-$t_3$, $t_5$-$t_3$ und $t_6$-$t_3$ werden analog wie oben beschrieben aus dem Volumen des Heizblockes (Rohr 14) zwischen den Widerständen und den Durchflußmengen ermittelt. Die für die entsprechende Steuerung der Schalter 32, 34 und 36 zur Stromversorgung der Widerstände R1, ..., R6 erforderlichen Programme können in bekannte Mikroprozessoren geladen werden.

Es ist offensichtlich nicht entscheidend, wieviele Heizwiderstände beim vorstehend beschriebenen Durchlauferhitzer eingesetzt werden. Hinsichtlich des Aufwandes an Bauteilen und der Anzahl erforderlicher Schalter ergeben sich besonders einfache Verhältnisse, wenn insgesamt, wie gezeigt, sechs Widerstände R1, ..., R6 eingesetzt werden, deren Leistungen zueinander in Strömungsrichtung 10 des Wassers im Verhältnis 1:1:1,5:3:3:3 zueinander stehen (d.h. die Leistung des ersten Widerstandes R1 ist auf "1" normiert).

## Ansprüche

1. Durchlauferhitzer für Wasser mit

  - einem Strömungsweg (10, 20) für das zu erhitzende Wasser, in dem eine Mehrzahl von Heizelementen (R1 ... R6), wie beispielsweise Heizwiderstände, derart angeordnet sind, daß sie das zu erhitzende Wasser der Reihe nach passiert,
  - zumindest einer Temperaturmeßeinrichtung (F1) am Einlauf (20) des Wassers in den Durchlauferhitzer und
  - mit einer Steuerschaltung (26) zum Steuern der Heizleistung ausgewählter Heizelemente (R2 ... R6), um am Auslauf (22) aus dem Durchlauferhitzer erhitztes Wasser mit einer vorgegebenen Solltemperatur (TS) zu erhalten, dadurch **gekennzeichnet,** daß Einrichtungen (F2; R1) vorgesehen sind, um die Temperaturerhöhung (T2-T1) des Wassers durch ein Heizelement (R1) oder einen Teil der Heizelemente (R1, ..., R6) zu messen und daß die Heizleistung ausgewählter anderer, stromauf oder stromab angeordneter Heizelemente (R2 ... R6) gemäß der gemessenen Temperaturerhöhung (T2-T1) und der Solltemperatur (TS) gesteuert wird.

2. Durchlauferhitzer nach Anspruch 1, dadurch **gekennzeichnet,** daß die Temperaturerhöhung (T2-T1) des Wassers, welche durch das dem Einlauf (10) nächstliegende Heizelement (R1) bewirkt wird, gemessen und die Heizleistung ausgewählter Heizelemente (R2, ..., R6) stromab gesteuert wird.

3. Durchlauferhitzer nach einem der Ansprüche 1 oder 2, dadurch **gekennzeichnet,** daß im Strömungsweg (10, 20) des Wassers vor und nach einem Heizelement (R1) bzw. wenigen Heizelementen aus der Mehrzahl von Heizelementen ein Temperaturfühler (F1 bzw. F2) angeordnet ist.

4. Durchlauferhitzer nach einem der vorhergehenden Ansprüche, dadurch **gekennzeichnet,** daß die Heizleistung (PS-P1) der stromab bzw. stromauf angeordneten Heizelemente (R2, ..., R6) in Abhängigkeit vom Volumen des Strömungsweges zwischen dem vorne angeordneten Heizelement (R1) und den ausgewählten nachfolgenden Heizelementen (R2 ... R6) steuerbar ist.

5. Durchlauferhitzer nach einem der vorhergehenden Ansprüche, dadurch **gekennzeichnet,** daß als Heizelemente Widerstände (R1 ... R6) vorgesehen sind, deren Widerstandswerte gemessen und in einem Speicher (28) gespeichert werden, der mit der Steuerschaltung (26) verbindbar ist.

6. Durchlauferhitzer nach einem der vorhergehenden Ansprüche, dadurch **gekennzeichnet,** daß die an den Heizelementen (R1 ... R6) anliegenden, momentanen Spannungen gemessen und in die Steuerschaltung (26) eingegeben und bei der Steuerung der Heizleistung berücksichtig werden.

7. Durchlauferhitzer nach einem der vorhergehenden Ansprüche,
dadurch **gekennzeichnet,**
daß die Heizelemente (R1 ... R6) jeweils gruppenweise in Dreieckschaltung an ein Drehstromnetz (L1, L2, L3) angeschlossen sind.

8. Durchlauferhitzer nach einem der vorhergehenden Ansprüche,
dadurch **gekennzeichnet,**
daß bei der Regelung der Heizleistung zumindest eines der nachfolgenden Heizelemente (R2 ... R6) getaktet mit Strom versorgt wird.

## Claims

1. Continuous flow heater for water, comprising
   - a flow path (10, 20) for the water to be heated, in which flow path a plurality of heating elements (R1 ... R6), such as heating resistors, for example, are so arranged that the water to be heated passes by them one after the other,
   - one temperature measuring device (F1), at least, at the water inlet (20) to the continuous flow heater, and
   - a control circuit (26) for controlling the heating capacity of selected heating elements (R2 ... R6) in order to obtain at the outlet (22) from the continuous flow heater heated water at a given desired temperature (TS), **characterized** in that
   provision is made of means (F2; R1) in order to measure the temperature increase (T2-T1) of the water caused by a heating element (R1) or by part of the heating elements (R1, ..., R6), and that the heating capacity of selected further upstream or downstream heating elements (R2 ... R6) is controlled in accordance with the measured temperature increase (T2-T1) and the desired temperature (TS).

2. Continuous flow heater according to claim 1, **characterized** in that
the temperature increase (T2-T1) of the water caused by the heating element (R1) closest to the inlet (10), is measured and that the heating capacity of selected downstream heating elements (R2, ..., R6) is controlled.

3. Continuous flow heater according to any of claims 1 or 2,
**characterized** in that
a temperature probe (F1 or F2) is disposed in the flow path (10, 20) of the water before and after respectively a heating element (R1) or of a few heating elements out from the plurality of heating elements.

4. Continuous flow heater according to any of the preceding claims,
**characterized** in that
the heating capacity (Ps-P1) of the downstream and upstream heating elements (R2, ..., R6) is controllable in response to the volume of the flow path between the front heating element (R1) and the selected succeeding heating elements (R2 ... R6).

5. Continuous flow heater according to any of the preceding claims,
**characterized** in that
as the heating elements resistors (R1 ... R6) are provided, the resistances of which are measured, and stored in a memory device (28) capable of being connected to the control circuit (26).

6. Continuous flow heater according to any of the preceding claims,
**characterized** in that
the instantaneous voltages existing across the heating elements (R1 ... R6) are measured and inputted into the control circuit (26) and are taken into account in controlling the heating capacity.

7. Continuous flow heater according to any of the preceding claims,
**characterized** in that
the heating elements (R1 ... R6) are delta-connected by groups to a three-phase alternating current mains (L1, L2, L3).

8. Continuous flow heater according to any of the preceding claims,
**characterized** in that
when controlling the heating capacity, at least one of the succeeding heating elements (R2 ... R6) is receiving a pulsed supply of current.

## Revendications

1. Chauffe-eau instantané, comprenant
   - un trajet de courant (10, 20) pour l'eau à chauffer, dans lequel un nombre d'éléments chauffants (R1 ... R6), tels que des résistances de chauffage, par exemple, est disposé de manière que l'eau à chauffer les passe l'un après l'autre,

- un dispositif de mesure de température (F1), au moins, au droit de l'entrée (20) de l'eau dans le chauffe-eau instantané, et
- un circuit de contrôle (26) destiné à contrôler la capacité de chauffage d'éléments chauffants sélectionnés (R2 ... R6), de manière à obtenir à la sortie (22) du chauffe-eau instantané de l'eau chauffée à une certaine température demandée (TS), **caractérisé** en ce que

des moyens (F2; R1) sont prévus, destinés à mesurer l'augmentation de la température (T2-T1) de l'eau, effectuée par un élément chauffant (R1) ou par une partie des éléments chauffants (R1, ..., R6), et en ce que la capacité de chauffage d'autres éléments chauffants (R2 ... R6), sélectionnés et disposés en amont ou en aval, est contrôlée en fonction de l'augmentation de température mesurée (T2-T1) et de la température demandée (TS).

2. Chauffe-eau instantané selon la revendication 1,
   **caractérisé** en ce que
   l'on mesure l'augmentation de température (T2-T1) de l'eau effectuée par l'élément chauffant (R1) le plus proche de l'entrée (10), et que l'on contrôle la capacité de chauffage d'éléments chauffants sélectionnés (R2, ..., R6), disposés en aval.

3. Chauffe-eau instantané selon l'une quelconque des revendications 1 ou 2,
   **caractérisé** en ce que
   une sonde de température (F1 ou F2) est disposée dans le trajet de courant (10, 20) de l'eau avant et après respectivement un élément chauffant (R1) ou quelques éléments chauffants parmi le nombre d'éléments chauffants.

4. Chauffe-eau instantané selon l'une quelconque des revendications précédentes,
   **caractérisé** en ce que
   la capacité de chauffage (PS-P1) des éléments chauffants (R2, ..., R6) disposés en aval ou en amont, est capable d'être contrôlée en fonction du volume du trajet de courant situé entre l'élément chauffant avant (R1) et les éléments chauffants suivants sélectionnés (R2 ... R6).

5. Chauffe-eau instantané selon l'une quelconque des revendications précédentes,
   **caractérisé** en ce que
   l'on a prévu, comme des éléments chauffants, des résistances (R1 ... R6) dont les valeurs de résistance sont mesurées et stockées dans un dispositif de mémoire (28), susceptible d'être relié au circuit de contrôle (26).

6. Chauffe-eau instantané selon l'une quelconque des revendications précédentes,
   **caractérisé** en ce que
   les tensions instantanées appliquées aux éléments chauffants (R1 ... R6) sont mesurées et introduites dans le circuit de contrôle (26) et sont prises en compte dans le contrôle de la capacité de chauffage.

7. Chauffe-eau instantané selon l'une quelconque des revendications précédentes,
   **caractérisé** en ce que
   les éléments chauffants (R1 ... R6) sont connectés par groupes, montés en delta, à un réseau de courant alternatif triphasé (L1, L2, L3).

8. Chauffe-eau instantané selon l'une quelconque des revendications précédentes,
   **caractérisé** en ce que
   durant le contrôle de la capacité de chauffage, l'un des éléments chauffants suivants (R2 ... R6), au moins, est alimenté en courant à impulsions.

EP 0 229 323 B1

F1  16  18  F2  22

R1  R2  R3  R4  R5  R6

10  20  T1  T2  14  TS  12

**FIG.1**

L1  30  16  R4  R1  18

30'  36"  36'  36  34

R6  R3

L3  R2  32  L2

R5  36'''

30"  $U_{L1,L2}$  T1

$U_{L2,L3}$  26  T2

$U_{L3,L1}$

28

**FIG.2**

FIG.3a

FIG.3b

FIG.3c

FIG.3d

FIG.3e

FIG.3f

EP 0 229 323 B1